# EUROPEAN PATENT SPECIFICATION

(11) **EP 2 821 747 B1**
(45) Date of publication and mention of the grant of the patent: **25.10.2017**
(21) Application number: 13755190.9
(22) Date of filing: 18.02.2013
(51) Int. Cl.: G01B 11/00, B60L 5/26, B60M 1/28

(54) **PANTOGRAPH MEASUREMENT METHOD, AND PANTOGRAPH MEASUREMENT DEVICE**
STROMABNEHMERMESSVERFAHREN UND STROMABNEHMERMESSVORRICHTUNG
PROCÉDÉ DE MESURE DE PANTOGRAPHE ET DISPOSITIF DE MESURE À STRUCTURE DE PANTOGRAPHE

(30) Priority: 29.02.2012 JP 2012043496
(43) Date of publication of application: 07.01.2015
(73) Proprietor: Meidensha Corporation, Tokyo 141-6029 (JP)
(72) Inventor: WATABE, Yusuke, Tokyo 141-6029 (JP); NIWAKAWA, Makoto, Tokyo 141-6029 (JP)
(74) Representative: Strehl Schübel-Hopf & Partner
(86) International application number: PCT/JP2013/053826
(87) International publication number: WO 2013/129153

(56) References cited:
- EP-A1- 2 404 777
- WO-A1-2010/084920
- JP-A- 2008 104 312
- JP-A- 2009 198 370
- JP-A- 2009 244 023
- JP-A- 2009 244 023
- JP-A- 2010 190 886

## Description

### TECHNICAL FIELD

The present invention relates to a pantograph measurement method of measuring a pantograph on the basis of image processing and to a pantograph measurement device using this method.

### BACKGROUND ART

Equipment of an electric railroad includes a trolley line. The trolley line needs to be installed within a range of a specific height from a rail level.

Accordingly, management needs to be performed such that the height of the trolley line is kept within a management value without being affected by aged deterioration and dynamic factors of a vehicle. In this case, since the height of the trolley line is equivalent to the height of the pantograph, the height of the pantograph is used instead in the management. The pantograph is one type of an electricity collecting device installed on a roof of an electric railway vehicle.

If the pantograph moves downward at great acceleration in operation, the pantograph and the trolley line are separated from each other and the trolley line locally wears due to an electric arc generated in this separation. Accordingly, management needs to be performed such that the acceleration of the pantograph is small.

Means for measuring the pantograph includes dedicated measurement vehicles called an inspection car, a clearance car, and the like and these vehicles are operated at a fixed cycle between commercial operations. Many sensors for measuring inclination of a vehicle body, misalignment of rails, and the like are attached to these measurement vehicles, and a measurement sensor for the pantograph is included as one of these sensors ("Modern Technology of Electric Railroad Equipment Maintenance" by the institute of electric engineers of Japan).

The pantograph measurement methods include a laser sensor method, a light-section sensor method, an acceleration sensor method, and an image processing method and these methods have the following characteristics.
1) A scan-type laser sensor is mainly used as the laser sensor and the laser sensor is a sensor which scans a laser beam over the pantograph by using a mirror or the like and thereby measures the distance to the pantograph on the basis of difference in the position of a reflected wave of the laser beam and deformation of the shape of the illuminating laser.
2) The light-section sensor is a sensor which measures the distance to the pantograph by projecting stripe-pattern light on a measurement target and receiving the stripe-pattern light distorted according to the shape of the pantograph.
3) The acceleration sensor is a sensor which outputs acceleration by using a gyroscope, a piezoelectric element, and the like and is a sensor which is directly attached to the pantograph to measure the acceleration of the pantograph.
4) The image processing method includes a method of detecting the pantograph through model matching and pattern matching.

However, these methods have the following problems.
1. A scanning cycle of the laser sensor is set to be relatively long due to the limit of the number of revolutions of a motor used to rotate the mirror and for prevention of resonance of the mirror. The laser sensor thus has a problem that, although the sensor can measure the position of the pantograph (low frequency component), the sensor is unsuitable for the measurement of acceleration (high frequency component).
2. The light-section sensor cannot perform measurement in daytime. Accordingly, measurement in daytime when thermal expansion is great cannot be performed.
3. The method of measuring the acceleration of the pantograph with the acceleration sensor is a method currently mainly used. However, the following measures needs to taken and this method is not a simple measurement method.
   (A) The sensor needs to be directly fixed to the pantograph.
   (B) Noise resistance needs to be considered for a cable used to take out a sensor output voltage.
   (C) Insulating properties need to be considered for the cable used to take out the sensor output voltage.
4. The image processing method has a problem that, when the measurement time is long or the number of frame rates per unit time is great, the amount of calculation processing becomes enormous. Moreover, the image processing method has a risk of temporarily losing sight of the pantograph due to abrupt change of background which occurs at an entrance of a tunnel, under an overpass, and the like, and data loss may occur.

To solve the problems described above, in "Pantograph Measurement Device Based on Image Processing (Japanese Patent Application Publication No. 2008 -104312)" (Patent Document 1), forming the basis for the two-part form of present claims 1 and 2, a known marker is attached to a pantograph and, in this marker, black markers separate white markers from the background (sky and the like). Accordingly, measurement can be performed even in daytime by searching for a pattern of this marker. Moreover, even when the background abruptly changes at an entrance of a tunnel or the like, since the white marker reflects light of a light projector, continuous measurement can be performed without data loss.

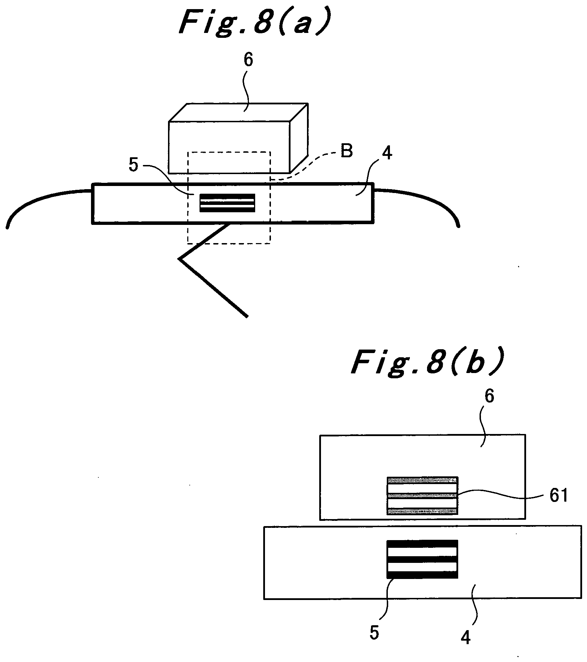

However, in this method, when a structure having a specular gloss passes over the marker as shown in Fig. 8, two markers of the actual marker and a mirror-reflected marker appear in an image captured by a camera and erroneous recognition may occur.

### PRIOR ART DOCUMENTS

### PATENT DOCUMENTS

Patent Document 1: Japanese Patent Application Publication No. 2008-104312. Further prior art: JP 2009 244023 A.

### SUMMARY OF THE INVENTION

### PROBLEMS TO BE SOLVED BY THE INVENTION

The pantograph measurement methods include the laser sensor method, the light-section sensor method, the acceleration sensor method, the image processing method, and the measurement method of Patent Document 1 based on image processing using a line sensor and these methods have the following problems.
(1) The scanning cycle of the laser sensor is set to be relatively long due to the limit of the number of revolutions of the motor used to rotate the mirror and for prevention of resonance of the mirror. The laser sensor thus has a problem that, although the sensor can measure the position of the pantograph (low frequency component), the sensor is unsuitable for the measurement of acceleration (high frequency component).
(2) The light-section sensor cannot perform measurement in daytime. Accordingly, measurement in daytime when thermal expansion is great cannot be performed.
(3) The method of measuring the acceleration of the pantograph with the acceleration sensor is a method currently mainly used. However, the following measures and the like needs to be taken: the sensor needs to be directly fixed to the pantograph; noise resistance needs to be considered for the cable used to take out the sensor output voltage; and insulating properties need to be considered for the cable used to take out the sensor output voltage. Hence, this method is not a simple measurement method.
(4) The image processing method has a problem that, when the measurement time is long or the number of frame rates per unit time is great, the amount of calculation processing becomes enormous. Moreover, the image processing method has a risk of temporarily losing sight of the pantograph due to abrupt change of background which occurs at an entrance of a tunnel, under an overpass, and the like, and data loss may occur.

Moreover, in Patent Document 1, as shown in Fig. 8, the marker 5 including black and white stripes of equal width is attached to the pantograph 4. Accordingly, when the structure 6 having specular gloss passes over the marker 5, two markers of the actual marker 5 and the marker 61 mirror-reflected on the structure 6 appear in an image captured by the camera and erroneous recognition may occur.

### MEANS FOR SOLVING THE PROBLEMS

The above problems are overcome by the method defined in present claim 1 and the device defined in present claim 2.

### EFFECT OF THE INVENTION

(i) Since a non-contact method is employed, the method and device of the present invention can be used in high-speed travelling.
(ii) Due to the structure of the device, the sensor is installed at a position away from existing structures such as points, air sections, and anchors. Accordingly, there is no need to consider collisions with the existing structures.
(iii) Use of special lighting is unnecessary.
(iv) There is no need to consider effects on human bodies compared to a method of using a laser beam and handling is easy.
(v) There is no burden of performing accurate positioning between a light source and a light receiving device compared to the method of using a laser beam.
(vi) Image capturing is possible even in daytime by capturing the marker attached to the pantograph and performing pattern matching.
(vii) Data can be continuously obtained even in a case where the luminance of a background abruptly changes at an entrance of a tunnel or the like.
(viii) Even when a structure having a specular gloss passes over the marker and mirror reflection occurs, data can be continuously obtained without erroneous recognition.

### BRIEF DESCRIPTION OF THE DRAWINGS

[Fig. 1] Part (a) of Fig. 1 is a schematic view of a pantograph measurement device according to a basic idea, part (b) of Fig. 1 is an enlarged view of a portion H surrounded by a broken line in part (a).
[Fig. 2] Fig. 2 is an explanatory view showing an example of a marker pattern according to the basic idea.
[Fig. 3] Fig. 3 is a flowchart showing a pantograph measurement method according to the basic idea.
[Fig. 4] Fig. 4 is a graph showing an example of a space-time image.
[Fig. 5] Fig. 5 is an explanatory view showing an example of generation of a search pattern.
[Fig. 6] Fig. 6 is a graph showing scanning of the pantograph.
[Fig. 7] Fig. 7 is a graph showing interpolation of the position of the pantograph.
[Fig. 8] Part (a) of Fig. 8 is an explanatory view showing a structure having a specular gloss and a marker provided on a pantograph in a conventional technique and part (b) of Fig. 8 is an enlarged view of a portion B surrounded by a broken line in part (a).
[Fig. 9] Part (a) of Fig. 9 is an explanatory view showing a structure having a specular gloss and the marker provided on the pantograph in the present invention and part (b) of Fig. 9 is an enlarged view of a portion C surrounded by a broken line in part (a).

### MODE FOR CARRYING OUT THE INVENTION

The present invention is described below in detail with reference to an embodiment shown in the drawings.

### EMBODIMENT 1

### (1) Basic Idea

An object of the embodiment is to measure the height and acceleration of a pantograph in a simple way on the basis of image processing.

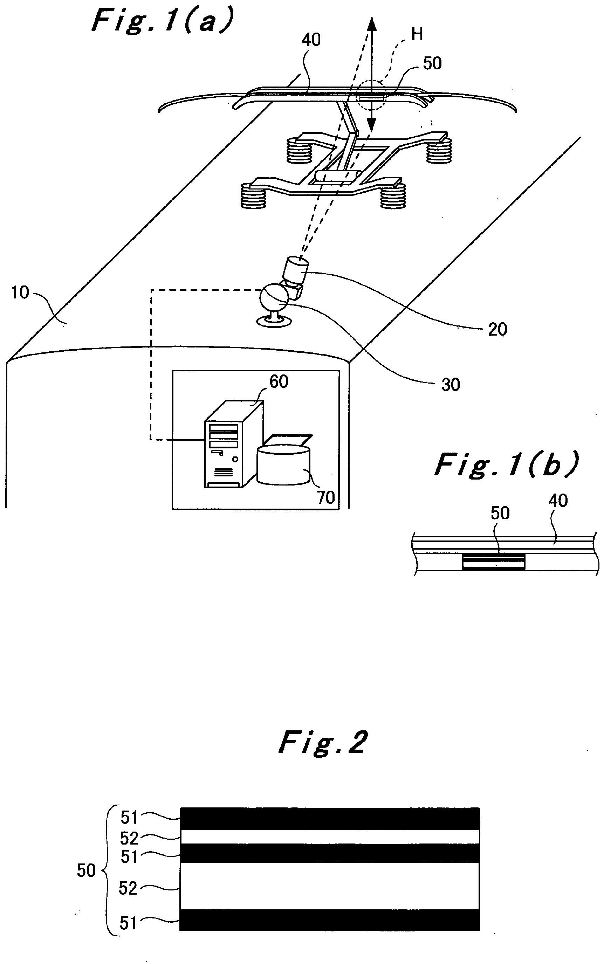

For example, in the configuration of the embodiment, as shown in Fig. 1, a line sensor 20 and a lighting apparatus 30 are installed on a roof of a vehicle 10, and a video image of a marker 50 attached to a pantograph head of a pantograph 40 is obtained by the line sensor 20 while being illuminated by the lighting apparatus 30.

The line sensor 20 is installed in such a direction that a line sensor captured plane shown by an arrow in the drawing vertically sections the pantograph 40 and the marker 50 in an up-down direction and the marker 50 can be always captured regardless of variation in the height of the pantograph 40.

As shown in an enlarged manner in Fig. 2, the marker 50 has a stripe pattern in which second regions 52 (hereafter, referred to as white markers) whose color and material are more capable of reflecting light overlap a base of first regions 51 (hereafter referred to as black markers) whose color and material are less capable of reflecting light. In this embodiment, two or more white markers 52 are provided to have shapes different in width. Moreover, three or more black markers 51 are provided to have the same width.

A normal lighting apparatus is used as the lighting apparatus 30.

Furthermore, the image obtained by the line sensor 20 is subjected to image processing in an image processing unit 60 and the height and acceleration of the pantograph 40 which are measured as a result of the image processing are recorded in a recording device 70.

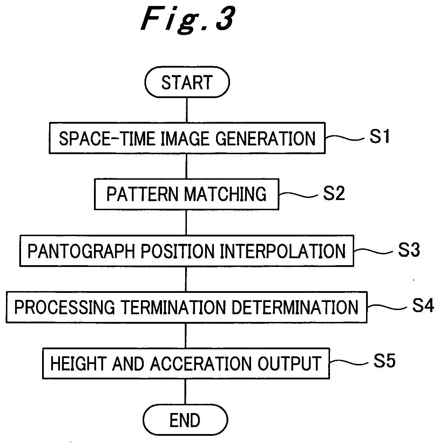

An image processing method in the image processing unit 60 is processed according to the flowchart shown in Fig. 3 in the order of space-time image generation (step S1), pattern matching (step S2), pantograph position interpolation (step S3), processing termination determination (step S4), and height and acceleration output (step S5), as described below.

### <Space-time Image Generation>

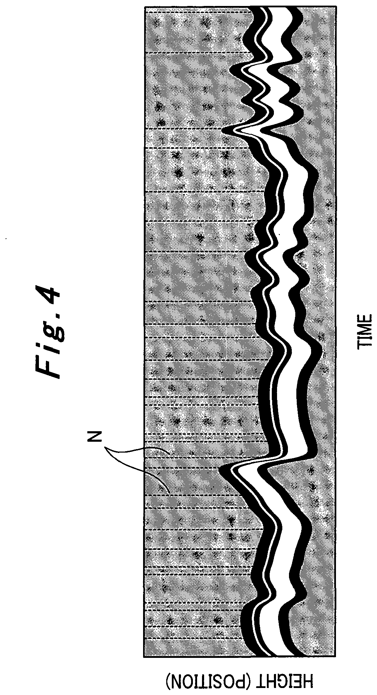

First, the video image of the marker 50 attached to the pantograph 40 is obtained by the line sensor 20 every unit time (every frame rate) and, as shown in Fig. 4, the image processing unit 60 generates a space-time image of an output of the line sensor 20, more specifically, a space-time image in which the vertical axis represents a height direction of the line sensor captured plane and the horizontal axis represents time.

In the space-time image shown in Fig. 4, there is continuously captured the stripe pattern including black strips where reflection of light is low and white stripes where reflection of light is high, as in the shape of the marker 50. In other words, the space-time image captures the stripe pattern including two white regions and three black regions.

Moreover, the background of the pantograph such as overhead line equipment passing by the pantograph at high speed appears as a noise N.

### <Pattern Matching>

The marker 50 captured by the line sensor 20 becomes more distant from the line sensor 20 as the position of the pantograph 40 becomes higher, and is captured as a smaller image. Hence, in consideration of the size of the marker 50 and the direction of the line sensor 20, the size of the captured marker 50 is substantially fixed depending on the position and direction of the marker 50 in the space-time image.

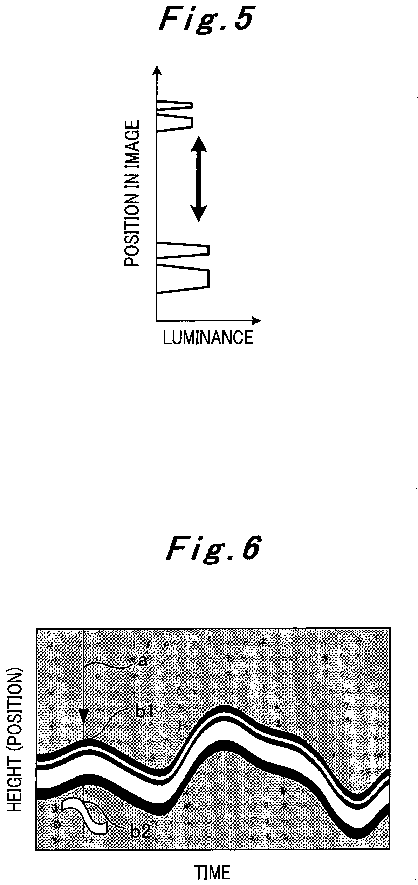

In view of this, as shown in Fig. 5, a search pattern corresponding to the pattern and height of the marker is generated. Specifically, the search pattern has two large and small mountain shapes of high luminance which correspond to the two white markers 52 of different widths, and the mountain shapes are set to become lower as the positions thereof in the image becomes higher.

Then, as shown in Fig. 6, the space-time image is scanned along a scanning line a, downward from an upper portion thereof every unit time to search for a portion matching the search pattern. Specifically, the space-time image is collated (subjected to pattern matching) with the search pattern corresponding to the height and a matching portion is recorded as a pantograph position. Moreover, even in a case of no match, if there are patterns approximate to the search pattern by a certain degree or more, multiple approximate portions are recorded as the pantograph position while being ranked in the descending order of approximation for each scanning line a.

To be more specific, as shown in Fig. 6, multiple portions such as a first candidate b1 and a second candidate b2 are recorded. In a case where there is no portion approximate to the search pattern, recording is suspended.

### <Pantograph Position Interpolation>

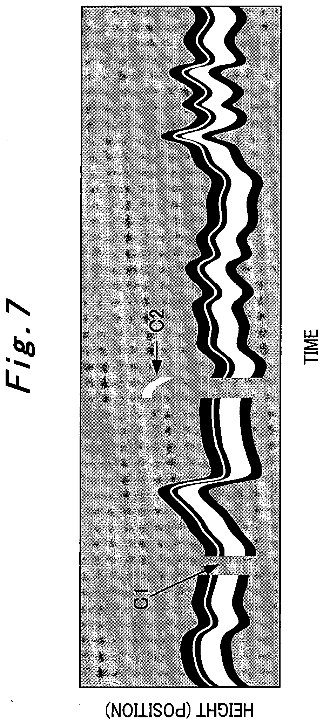

In the pattern matching, a pantograph position (suspended portion) c1 where the recording is suspended as shown in Fig. 7 and a pantograph position (unconnected portion) c2 where the pattern is not connected as shown in Fig. 7 are subjected to position interpolation by using prior and subsequent points.

A method of the interpolation includes a simple method of linearly interpolating the pantograph position in such a way that gaps in the suspended portion and the unconnected portion are filled. However, the interpolation may be performed by using other methods.

### <Processing Termination Determination>

The processing of the pattern matching (S2) and the pantograph position interpolation (S2) is repeated as described above for the entire space-time image and portions matching the search pattern or portions approximate to the search pattern by a certain degree or more are recorded in the recording device 70 as the pantograph positions.

### <Height Output>

The pantograph positions recorded in the recording device 70 are outputted as heights.

### <Acceleration Output>

An extreme of a point of reverse of a downward convex in the pantograph positions recorded in the recording device 70 is obtained and the extreme equal to or larger than a predetermined value is outputted as acceleration.

In the embodiment, the height and acceleration of the pantograph are measured on the basis of image processing and a non-contact method is employed. Accordingly, the method and device of the embodiment can be used in high-speed operations.

Moreover, due to the structure of the device, the sensor is installed at a position away from existing structures such as points, air sections, and anchors. Accordingly, there is no need to consider collisions with the existing structures and the line sensor images can be captured basically in all sections.

Furthermore, use of special lighting is unnecessary and there is no difficulty in handling as in a case of using a laser beam which requires consideration on effects on human bodies. There is no burden of performing accurate positioning between a light source and a light receiving device.

The pattern of the marker 50 attached to the pantograph 40 is known and, since the black markers 51 separate the white markers 52 from the background (sky and the like), the measurement can be performed even in daytime by searching for the pattern of the marker 50.

In Patent Document 1, as shown in Fig. 8, the marker 5 including black and white stripes of equal width is attached to the pantograph 4. Accordingly, when the structure 6 having specular gloss passes over the marker 5, two markers of the actual marker 5 and the marker 61 mirror-reflected on the structure 6 appear in an image captured by the camera and erroneous recognition may occur.

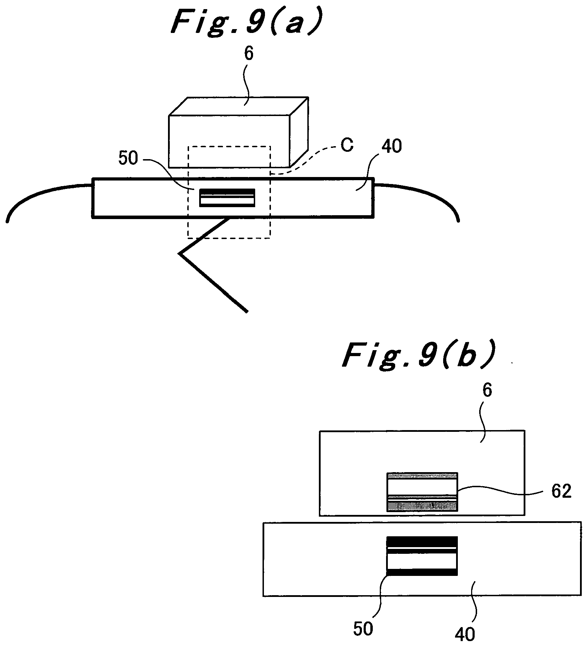

In the embodiment, as shown in Fig. 9, since the marker 50 including two or more white markers 52 of different stripe widths is installed on the pantograph 40, a pattern of a marker (reflected marker) 62 mirror-reflected on the structure 6 having specular gloss appear differently in an upside down posture. Accordingly, when the search pattern shown in, for example, Fig. 5 is used, no erroneous recognition occurs and data can be continuously obtained.

### INDUSTRIAL APPLICABILITY

The present invention can be widely used in industries as a pantograph measurement method capable of continuously obtaining the position and acceleration of a pantograph and as a pantograph measurement device using this method.

### EXPLANATION OF THE REFERENCE NUMERALS

- 10: vehicle
- 20: line sensor
- 30: lighting apparatus
- 40: pantograph
- 50: marker
- 51: black marker
- 52: white marker
- 60: image processing unit
- 70: recording device

## Claims

1. A pantograph measurement method based on image processing, including the steps of:
obtaining a video image of a marker (50) installed on a pantograph (40) from a line sensor (20) installed on a roof of a vehicle (10) and generating a space-time image from the obtained video image, wherein the marker (50) has a stripe pattern in which a first region (51) less capable of reflecting light and a second region (52) more capable of reflecting light are alternately arranged in parallel to each other;
searching for the marker (50) by collating the space-time image with a search pattern corresponding to a height, wherein the search pattern corresponds to the stripe pattern of the marker (50);
recording a portion matching the search pattern or a portion approximate to the search pattern by a certain degree or more as a pantograph position; and
measuring a height and acceleration from the recorded pantograph position,
**characterized in that** the marker (50) includes at least two of the second regions (52) of different stripe widths.

2. A pantograph measurement device based on image processing, including:
a line sensor (20) installed on a roof of a vehicle (10) and configured to obtain a video image of a marker (50) installed on a pantograph (40), wherein the marker (50) has a stripe pattern in which a first region (51) less capable of reflecting light and a second region (52) more capable of reflecting light are alternately arranged in parallel to each other; and
an image processing unit (60) configured to
generate a space-time image from the video image obtained by the line sensor (20),
search for a marker (50) by collating the space-time image with a search pattern corresponding to a height, wherein the search pattern corresponds to the stripe pattern of the marker (50),
record a portion matching the search pattern or a portion approximate to the search pattern by a certain degree or more as a pantograph position, and
measure a height and acceleration from the recorded pantograph position,
**characterized in that** the marker (50) includes at least two of the second regions (52) of different stripe widths.

## Patentansprüche

1. Auf Bildverarbeitung basierendes Stromabnehmer-Messverfahren, wobei in den Verfahrensschritten:
ein Videobild einer auf einem Stromabnehmer (40) vorgesehenen Markierung (50) durch einen auf einem Dach eines Fahrzeugs (10) installierten Liniensensor (20) erhalten und ein Raum-Zeit-Bild aus dem erhaltenen Videobild erzeugt wird, wobei die Markierung (50) ein Streifenmuster aufweist, in dem eine erste, weniger lichtreflektierende Region (51) und eine zweite, mehr lichtreflektierende Region (52) abwechselnd parallel zueinander angeordnet sind,
nach der Markierung (50) gesucht wird, indem das Raum-Zeit-Bild mit einem einer Höhe entsprechenden Suchmuster überlagert wird, wobei das Suchmuster dem Streifenmuster der Markierung (50) entspricht,
ein mit dem Suchmuster übereinstimmender Abschnitt oder ein dem Suchmuster mindestens zu einem bestimmten Grad ähnlicher Abschnitt als eine Stromabnehmerposition aufgezeichnet wird, und
eine Höhe und Beschleunigung aus der aufgezeichneten Stromabnehmerposition gemessen wird,
**dadurch gekennzeichnet, dass** die Markierung (50) wenigstens zwei der zweiten Regionen (52) mit verschiedenen Streifenbreiten aufweist.

2. Auf Bildverarbeitung basierende Stromabnehmer-Messvorrichtung, mit
einem Liniensensor (20), der auf einem Dach eines Fahrzeugs (10) installiert und dazu konfiguriert ist, ein Videobild einer auf einem Stromabnehmer (40) vorgesehenen Markierung (50) zu erhalten, wobei die Markierung (50) ein Streifenmuster aufweist, in dem eine erste, weniger lichtreflektierende Region (51) und eine zweite, mehr lichtreflektierende Region (52) abwechselnd parallel zueinander angeordnet sind, und
einer Bildverarbeitungseinheit (60), die dazu ausgelegt ist,
ein Raum-Zeit-Bild aus dem durch den Liniensensor (20) erhaltenen Videobild zu erzeugen,
nach einer Markierung (50) zu suchen, indem das Raum-Zeit-Bild mit einem einer Höhe entsprechenden Suchmuster überlagert wird, wobei das Suchmuster dem Streifenmuster der Markierung (50) entspricht,
einen mit dem Suchmuster übereinstimmenden Abschnitt oder einen dem Suchmuster mindestens zu einem bestimmten Grad ähnlichen Abschnitt als eine Stromabnehmerposition aufzuzeichnen, und
eine Höhe und Beschleunigung aus der aufgezeichneten Stromabnehmerposition zu messen,
**dadurch gekennzeichnet, dass** die Markierung (50) wenigstens zwei der zweiten Regionen (52) mit verschiedenen Streifenbreiten aufweist.

## Revendications

1. Procédé de mesure de pantographe basé sur un traitement d'image, comprenant les étapes consistant à :
obtenir une image vidéo d'un marqueur (50) installé sur un pantographe (40) à partir d'un capteur de ligne (20) installé sur un toit d'un véhicule (10) et générer une image dans l'espace-temps à partir de l'image vidéo obtenue, le marqueur (50) ayant un motif en bandes dans lequel une première région (51) moins apte à réfléchir la lumière et une deuxième région (52) plus apte à réfléchir la lumière sont disposées en alternance en parallèle l'une par rapport à l'autre ;
rechercher le marqueur (50) par collationnement des images dans l'espace-temps avec un motif de recherche correspondant à une hauteur, le motif de recherche correspondant au motif en bandes du marqueur (50) ;
enregistrer une partie correspondant au motif de recherche ou une partie s'approchant du motif de recherche d'un certain degré ou davantage comme position de pantographe ; et
mesurer une hauteur et une accélération à partir de la position de pantographe enregistrée,
**caractérisé en ce que** le marqueur (50) comprend au moins deux des deuxièmes régions (52) de largeurs de bande différentes.

2. Dispositif de mesure de pantographe basé sur un traitement d'image, comprenant :
un capteur de ligne (20) installé sur un toit d'un véhicule (10) et configuré de façon à obtenir une image vidéo d'un marqueur (50) installé sur un pantographe (40), le marqueur (50) ayant un motif en bandes dans lequel une première région (51) moins apte à réfléchir la lumière et une deuxième région (52) plus apte à réfléchir la lumière sont disposées en alternance en parallèle l'une par rapport à l'autre ; et
une unité de traitement d'image (60) configurée de façon à :
générer une image dans l'espace-temps à partir de l'image vidéo obtenue par le capteur de ligne (20),
rechercher un marqueur (50) par collationnement des images dans l'espace-temps avec un motif de recherche correspondant à une hauteur, le motif de recherche correspondant au motif en bandes du marqueur (50),
enregistrer une partie correspondant au motif de recherche ou une partie s'approchant du motif de recherche d'un certain degré ou davantage comme position de pantographe, et
mesurer une hauteur et une accélération à partir de la position de pantographe enregistrée,
**caractérisé en ce que** le marqueur (50) comprend au moins deux des deuxièmes régions (52) de largeurs de bande différentes.
